# EUROPÄISCHE PATENTSCHRIFT

(11) **EP 0 584 624 B1**
(45) Veröffentlichungstag und Bekanntmachung des Hinweises auf die Patenterteilung: **29.04.1998**
(21) Anmeldenummer: 93112730.2
(22) Anmeldetag: 09.08.1993
(51) Int. Cl.: C08G 71/04, C08G 18/38

(54) **Segmentierte N-Alkyl-Polyurethanamide**
Segmented N-alkylated polyurethane amides
Poly(uréthane) amides segmentées N-alkylées

(30) Priorität: 21.08.1992 DE 4227750
(43) Veröffentlichungstag der Anmeldung: 02.03.1994
(73) Patentinhaber: BAYER AG, 51368 Leverkusen (DE)
(72) Erfinder: Hugl, Herbert, Dr., D-51467 Bergisch Gladbach (DE); Köhler, Burkhard, Dr., D-47829 Krefeld (DE); Dhein, Rolf, Dr., D-47800 Krefeld (DE)

(56) Entgegenhaltungen:
- US-A- 4 588 783
- JOURNAL OF POLYMER SCIENCE PART A:POLYMER CHEMISTRY EDITION Bd. 28, Nr. 13 , Dezember 1990 , NEW YORK, US Seiten 3685 - 3699 CHAPMAN ET AL 'POLYURETHANE ELASTOMERS WITH HYDROLYTIC AND THERMOOOXIDATIVE STABILITY'
- J. Polym. Sci.: Part A: Polymer Chemistry, Vol. 28, 1473-82 (1990)

## Beschreibung

Gegenstand der vorliegenden Erfindung sind segmentierte N-Alkyl-Polyurethanamide, Verfahren zu deren Herstellung sowie deren Verwendung zur Herstellung von Formkörpern, Folien und Fasern, insbesondere auf dem Gebiet der Medizintechnik.

Zur Herstellung von Formkörpern, Folien und Fasern werden häufig Polyurethane verwendet. Dies gilt insbesondere auch auf dem Gebiet der Medizintechnik. Diese Polyurethane zeichnen sich durch hervorragende mechanische Eigenschaften und relativ günstige Körperverträglichkeit aus. Nachteilig wirkt sich jedoch die bei der thermoplastischen Verarbeitung auftretende Rückspaltung in die Ausgangspolyole und die Isocyanate bei Temperaturen von oberhalb ca. 200°C sowie die mangelnde hydrolytische Stabilität der Polyurethane aus (siehe z.B. S. Gogolewski in Colloid Polymere Science Nr. 267, 1989, 757 bis 785 oder J.H.Saunders in Rubber Chem. Technol 32, 1959, 337 ff oder H. Shintani und A. Nakamura in Journal of Analytica Toxicology 13, 1989, 354 bis 357). Daraus resultiert die rechnische Aufgabe, zur Herstellung von Formkörpern, Folien und Fasern, insbesondere auf dem Gebiet der Medizintechnik, thermo- und hydrolysestablile Materiallen zur Verfügung zu stellen, die gleichzeitig das erwünschte Niveau der mechanischen Eigenschaften aufweisen.

J. Polym. Sci. A28 (1990) 1473 beschreibt N-Alkyl-Polyurethanamide aus MDI bzw. H₁₂-MDI und N-Alkylpolyamiden, die schon eine höhere Stabilität gegenüber Hydrolyse und Thermooxidation zeigen als Polyester- oder Polyetherurethane. Es wurden nun neue segmentierte N-Alkyl-Polyurethanamide gefunden, die die genannten Anforderungen erfüllen.

Gegenstand der vorliegenden Erfindung sind segmentierte N-Alkylpolyurethanarnide der Formel (I)

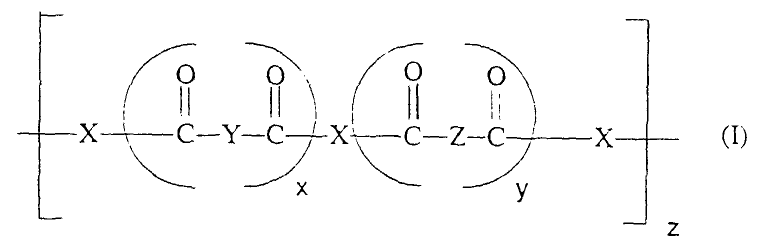

Im Rahmen der Formel (I) steht X für Oligoamide der Formel (II) 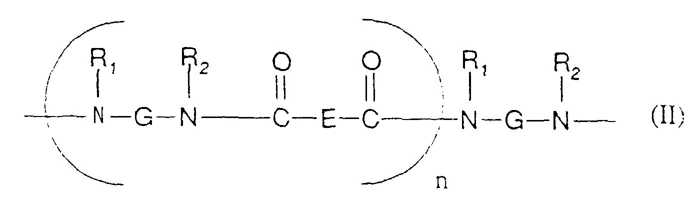 wobei
- E: für einen C₂-C₁₂-Alkylenrest oder einen C₆-C₈-Cycloalkylenrest, einen C₆-C₁₄-Arylenrest, vorzugsweise für einen C₄-C₈-Alkylenrest steht,
- G: für einen C₂-C₁₂-Alkylenrest,
- R¹ und R²: gleich oder verschieden sein können und für C₁-C₁₂-Alkylreste stehen oder vorzugsweise Glieder eines 6 oder 7 Ringatome zählenden Diazaheterocyclus sind und
- n: eine natürliche Zahl von 1 bis 30, vorzugsweise 2 bis 10 ist.

Im Rahmen der Formel (I) stehen weiters Y für Diglykolreste mit Mn >400, bevorzugt 600 bis 20 000 sowie Z für Diglykolreste mit Mn <400 oder Reste eines Diphenols der Formel (III)

―O-D-O― (III)

x und y stehen jeweils für 0 oder 1, wobei mindestens eines von beiden für 1 steht. z steht für eine Zahl, die angibt, daß Mw des Gesamtpolymers Werte zwischen 5 000 und 250 000 annimmt, bevorzugt 15 000 bis 150 000.

Ein weiterer Gegenstand der vorliegenden Erfindung sind Verfahren zur Herstellung der erfindungsgemäßen Polymeren der Formel (I), und zwar
1. Kondensation der niedermolekularen Polyamide der Formel (V) mit Bischlorsäureestern der Formel (VI) bzw. (VII). 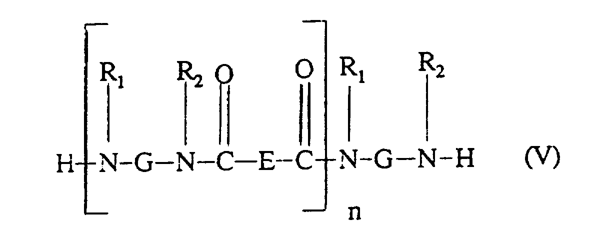 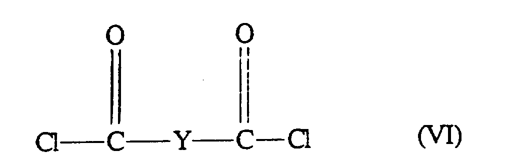 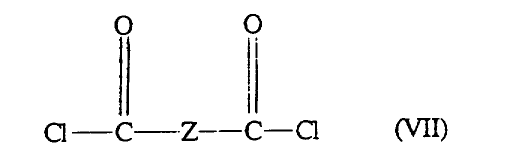 wobei G, Y, Z, E, R¹ und R² die obengenannte Bedeutung haben.
   Die Kondensation der niedermolekularen Polyamide, mit Bischlorkohlensäureestern erfolgt in Lösung unter Zusatz von Basen wie z.B.Natronlauge, Magnesiumoxid, Pyridin, Imidazol, Dimethylaminopyridin, Triethylamin oder N,N-Dimethylanilin oder N-Ethylpiperidin. Als Lösungsmittel werden z.B. Methylenchlorid. Chloroform, Chlorbenzol, Tetrahydrofuran, Dioxan oder Dioxolan eingesetzt.
2. Durch Kondensation der niedermolekularen Polyamide der Formel (V) mit niedermolekularen Alkylestern der Formeln (VIII) und (IX) 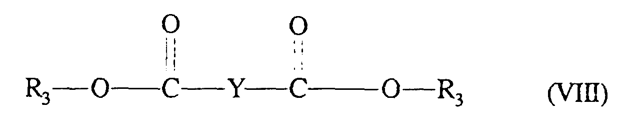 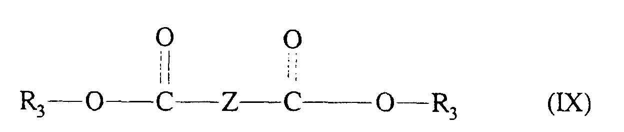
   Der Rest R₃ steht dabei für niedriges Alkyl wie Methyl, Ethyl, Propyl, Butyl. Die Schmelzkondensation erfolgt durch Reaktion der Edukte bei Temperaturen von 140 bis 300°C und Drücken von 0,001 bis 5 bar.
3. Ein weiteres Verfahren zur Herstellung der erfindungsgemäßen Polymeren (I) besteht in der Schmelkondensation der niedermolekularen Polyamide (V) mit den Diglykolen und Phenolen Y und Z in Gegenwart von Dialkylcarbonaten oder vorzugsweise Diphenylcarbonaten.

Die niedermolekularen Polyamide der Formel (I) werden hergestellt durch Schmelzkondensation aus Dicarbonsäuren der Formel (X)

HOOC―E―COOH (X)

und dissekundären Diaminen der Formel (XI)

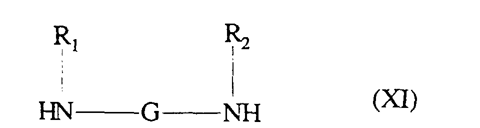

Die Reaktion der Edukte erfolgt bei Temperaturen von 140 bis 300°C und Drücken von 0,001 bis 5 bar, vorzugsweise unter Zusatz eines phosphorhaltigen Katalysators, wie z.B. phosphoriger Säure, hypophosphoriger Säure, Phosphorsäure, Triarylphosphiten oder -phosphaten, Trialkylphosphiten oder -phosphaten, Phosphonaten oder Phosphonsäuren, in Mengen von 0,01 bis 1 Gew.-%, bezogen auf die Summe der Edukte, wobei Wasser abdestilliert wird. Eine weitere Möglichkeit besteht in der Kondensation der Dicarbonsäurehalogenide mit den disekundären Diaminen. Im Rahmen der vorliegenden Erfindung werden zur Herstellung der niedermolekularen Polyamide der Formel (V) als Dicarbonsäuren der Formel (X) z.B. Adipinsäure, Acelainsäure, Sebacinsäure, Suberinsäure oder Dodecandisäure sowie Terephthalsäure, Isophthalsäure, Cyclohexandicarbonsäure-1,3 und -1,4, Naphthalindicarbonsäure-2,6 oder 2,2-Bis-(4-carboxyphenyl)-propan oder der Dichloride eingesetzt.

Als bissekundäre Diamine der Formel (XI) eignen sich z.B. Piperazin, N,N-Trimethylhexamethylendiamin, N,N-Dibutylhexamethylendiamin, N,N -Dimethylpropylendiamin-1,3, N,N-Dimethylethylendiamin, N,N-Didodecylhexamethylendiamin, N,N-Diisopropylhexamethylendiamin und Bis-(4-piperidyl)-propan-1,3. Als Diglykolreste Y kommen die in der Polyurethanchemie üblichen, als Weichsegmentpolyole bezeichneten und dem Fachmann an sich bekannten, vorzugsweise bifunktionellen, gegebenenfalls in untergeordneten Mengen, vorzugsweise bis 10 %, auch trifunktionellen Polyether, Polyester, Polylactone, Polydioether, Polyesteramide, Polycarbonate, Polyacetale, Vinylpolymere wie z.B. Polybutadiendiole oder auch bereits Urethan- oder Harnstoffgruppen enthaltende Polyhydroxylverbindungen, gegebenenfalls modifizierte natürliche Polyole sowie auch andere Zerewitinow-aktive Gruppen in Betracht. Diese Verbindungen werden z.B. in DE-A 2 302 564, 2 423 764, 2 549 372, 2 402 804. 2 920 501 sowie 2 457 387 eingehend beschrieben.

Erfindungsgemäß bevorzugt sind im wesentlichen bifunktionelle hydroxylgruppenhaltige Diole auf Polyethylenoxid- und/oder Polypropylenoxidbasis sowie Polytetramethylenglykolether und entsprechende Mischether aus derartigen Komponenten. Weiters sind verseifungsempfindliche, hydroxylgruppenhaltige Polyester Hydroxylpolycarbonate oder Polydimethylsiloxane mit Hydroxylendgruppen bevorzugt. Die mittlere Molmasse dieser Polyole liegt zwischen 550 und 20 000, bevorzugt zwischen 1 000 und 8 000.

Als kurzkettige Diglykolreste Z eignen sich insbesondere Alkohole wie Ethylenglykol, 1,4-Butandiol, 1,6-Hexandiol, Neopentylglykol, Hydrochinon-bis-2-hydroxyethyl-ether 1,4'-Cyclohexandiol, Diethylenglykol, 4,4'-Dihydroxycyclohexylmethan sowie die Diphenole der Formel (III).

Beispiele für Diphenole (III) sind:
4,4'-Dihydroxydiphenyl,
2,4'-Dihydroxydiphenyl,
4,4'-Dihydroxy-3,3',5,5'-tetramethyldiphenyl,
4,4'-Dihydroxy-3,3'-dimethyldiphenylo,
Bis-(4-hydroxyphenyl)-methan,
Bis-(4-hydroxy-3,5-dimethylphenyl)-methan,
Bis-(4-hydroxyphenyl)-ethan,
2,2-Bis-(4-hydroxyphenyl)-propan ("Bisphenol A"),
2,2-Bis-(4-hydroxyphenyl-3,5-dimethylphenyl)-propan,
2,2-Bis-(4-hydroxy-3-methylphenyl)-propan,
1,1-Bis-(4-hydroxyphenyl)-cyclohexan,
1,1-Bis-(4-hydroxy-3,5-dimethylphenyl)-cyclohexan,
Bis-(4-hydroxyphenyl)-oxid,
Bis-(4-hydroxy-3,5-dimethylphenyl)-oxid,
Bis-(4-hydroxyphenyl)-keton,
Bis-(4-hydroxy-3,5-dimethylphenyl)-keton,
Bis-(4-hydroxy-3,3'-diethylphenyl)-propan,
1,1-Bis-(4-hydroxyphenyl)-3,3,5-trimethyl-cyclohexan,
Bis-(4-hydroxyphenyl)-sulfon,
Bis-(4-hydroxy-3,3'-dimethylphenyl)-sulfon,
Bis-(4-hydroxyphenyl)-sulfid und
Bis-(4-hydroxy-3,5-dimethylphenyl)-sulfid.

Besonders bevorzugt sind:
2,2-Bis-(4-hydroxyphenyl)-propan und
1,1-Bis-(4-hydroxyphenyl)-3,3,5-trimethyl-cyclohexan.

Der Gegenstand der Erfindung soll anhand der folgenden Beispiele noch näher erläutert werden.

### Beispiele

### Beispiel 1 (Herstellung eines niedermolekularen Polyamids)

Man erwärmt die Mischung aus Sebacinsäure und Piperazin im Molverhältnis 1:2,1 mit 0,5 Gew.-% Triphenylphosphit innerhalb von 5 Stunden auf 260°C und hält 18 Stunden bei dieser Temperatur. Man erhält ein niedermolekulares Polyamid der Molmasse (Mn, bestimmt aus Aminzahl) 724.

### Beispiel 2 (Herstellung eines niedermolekularen Polyamids)

Man verfährt wie in Beispiel 1 beschrieben mit einem Molverhältnis Sebacinsäure zu Piperazin 1:1,333 und erhält ein niedermolekulares Polyamid der Molmasse (Mn, bestimmt aus Aminzahl) 1275.

### Beispiel 3 (Herstellung eines niedermolekularen Polyamids)

Man verfährt wie in Beispiel 1 beschrieben mit einem Molverhältnis Sebacinäure zu Piperazin 0,875:1 und erhält ein niedermolekulares Polyamid der Molmasse (Mn, bestimmt aus Aminzahl) 2 244.

### Beispiel 4

Bei 20°C werden 120°C des Bischlorformiats eines Polyethylenglykolethers vom Molgewicht 8 000 sowie 17,83 g Hexandiolbischlorkohlensäureester in 1 000 ml Methylenchlorid vorgelegt. Man tropft bei 20°C eine Lösung aus 63,76 g des niedermolekularen Polyamids aus Beispiel 1, 0,2 ml N-Ethylpiperidin in 250 ml Methylenchlorid zu. Danach tropft man 34 g Natronlauge als 10 %ige wäßrige Lösung zu. Man läßt eine Stunde nachrühren, schüttelt mit verdünnter Salzsäure aus und wäscht mit Wasser neutral. Man erhält ein elastisches Produkt mit einer relativen Lösungsviskosität (0,5 % in Methylenchlorid) von 1,593.

### Beispiel 5

In 1 000 ml Methylenchlorid löst man bei 20°C 60 g des Bischlorkohlensäureesters eines Polyethylenglykols mit Molgewicht 8000 und 59,65 g Hexandiolbischlorkohlensäureester. Bei 20°C tropft man im Laufe von 30 min eine Lösung von 180,3 g des niedermolekularen Polyamids aus Beispiel 1 und 0,2 ml N-Ethylpiperidin in 250 ml Methylenchlorid zu. Anschließend läßt man im Laufe von 15 min 960 g einer 10 %igen Natronlaugelösung zulaufen. Man läßt eine Stunde nachrühren, schüttelt mit verdünnter Salzsäure aus und wäscht mit Wasser neutral. Nach Abdestillieren des Methylenchlorids erhält man ein elastisches Produkt mit einer relativen Lösungsviskosität (0.5 % in Methylenchlorid) von 1,638.

### Beispiel 6

In 500 ml Methylenchlorid löst man bei 20°C 48,6 g Hexandiolbischlorkohlensäureester. Dazu tropft man innerhalb von 30 min eine Lösung von 216,8 g des niedermolekularen Polyamids aus Beispiel 2, gelöst in 1 000 ml Methylenchlorid zu. Daraufhin läßt man innerhalb von 10 min 80 ml einer 50 gew.-%igen Natronlaugelösung zulaufen. Dadurch wird ein pH-Wert von 13 erreicht. Nach einer Stunde Nachrühren bei 20°C schüttelt man mit verdünnter Salzsäure aus und wäscht mit Wasser neutral. Nach Abdestillieren des Methylenchlorids erhält man ein Produkt mit einer relativen Lösungsviskosität (0,5 % in Methylenchlorid) von 1,712. Das Produkt hat eine Schmelztemperatur (DSC) von 141,3°C und einen maximalen Gewichtsverlust (TGA in Luft) bei 473°C.

## Patentansprüche

1. Segmentierte N-Alkylpolyurethanamide der Formel (I) 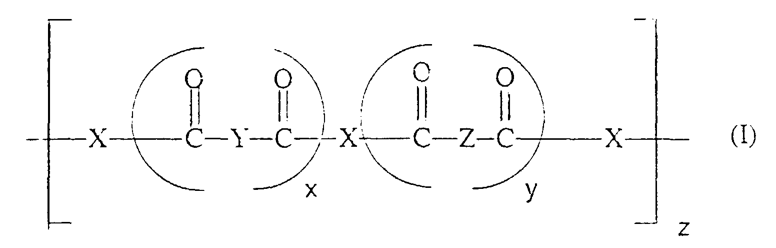 wobei X für Oligoamide der Formel (II) 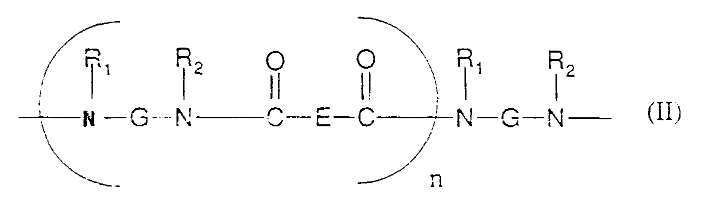 wobei
E für einen C₂-C₁₂-Alkylenrest oder einen C₆-C₈-Cycloalkylenrest, einen C₆-C₁₄-Arylenrest, vorzugsweise für einen C₄-C₈-Alkylenrest steht.
G für einen C₂-C₁₂-Alkylenrest,
R¹ und R² gleich oder verschieden sein können und für C₁-C₁₂-Alkylreste stehen oder vorzugsweise Glieder eines 6 oder 7 Ringatome zälhlenden Diazaheterocyclus sind und
n eine natürliche Zahl von 1 bis 30, vorzugsweise bis 10 ist.
Y für Diglykolreste mit Mn >400, bevorzugt 600 bis 20 000 sowie
Z für Diglykolreste mit Mn <400 oder Reste eines Diphenols der Formel (III)
-O-D-O (III)
(D = aromatischer Rest)
x und y jeweils für 0 oder 1, wobei mindestens eines von beiden für 1 steht,
z für eine Zahl, die angibt, daß Mw des Gesamtpolymers Werte zwischen 5 000 und 250 000 annimmt, bevorzugt 15 000 bis 150 000.

2. Verfahren zur Herstellung der segmentierten N-Alkylpolyurethanamide nach Anspruch 1, dadurch gekennzeichnet, daß man niedermolekulare Polyamide der Formel (V) 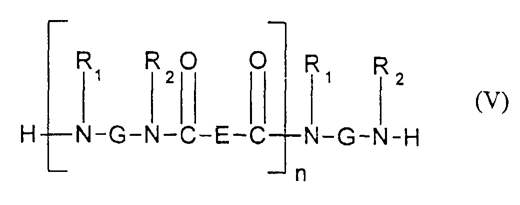 mit Bischlorkohlensäureestern der Formeln (VI) bzw. (VII) 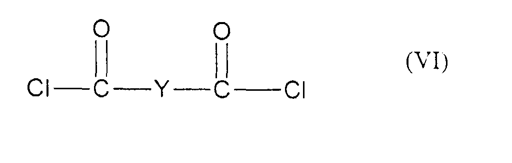 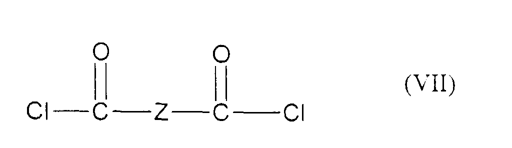 wobei G, Y, Z, E, R¹ und R² die in Anspruch 1 angegebene Bedeutung haben, kondensiert.

3. Verwendung der segmentierten N-Alkyl-Polyurethanamiden nach Anspruch 1 zur Herstellung und Beschichtung von Kunststofformkörpern, Folien und Fasern.

## Claims

1. Segmented N-alkylpolyurethaneamides of the formula (I) 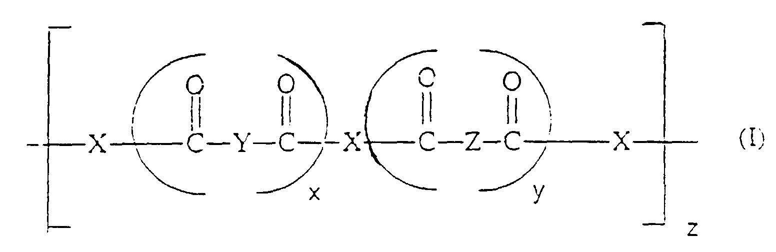 wherein X denotes oligoamides of the formula (II) 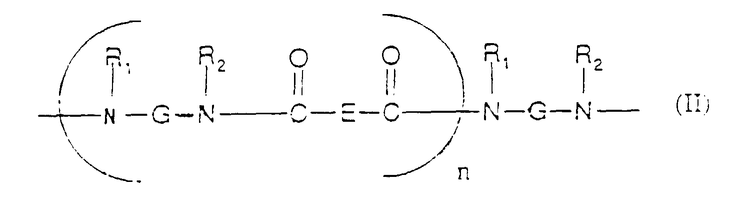 wherein
E denotes a C₂-C₁₂ alkylene residue, a C₆-C₈ cycloalkylene residue or a C₆-C₁₄ arylene residue, preferably a C₄-C₈ alkylene residue,
G denotes a C₂-C₁₂ alkylene residue,
R¹ and R² may be identical or different and denote C₁-C₁₂ alkyl residues or, preferably, are members of a diazaheterocycle having 6 or 7 ring atoms and
n is a whole number from 1 to 30, preferably from 2 to 10,
Y denotes diglycol residues of Mn >400, preferably of 600 to 20000 and
Z denotes diglycol residues of Mn <400 or residues of a diphenol of the formula (III)
-O-D-O (III)
(D = aromatic residue)
x and y each denote 0 or 1, wherein at least one of x and y denotes 1,
z denotes a number which indicates that the Mw of the entire polymer assumes values of between 5000 and 250000, preferably of 15000 to 150000.

2. Process for the production of the segmented N-alkylpolyurethaneamides according to claim 1, characterised in that low molecular weight polyamides of the formula (V) 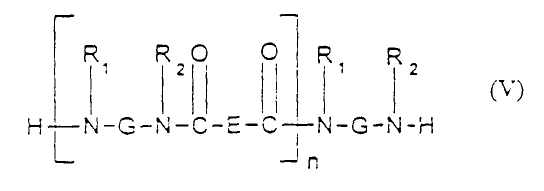 are condensed with bischlorocarbonic acid esters of the formulae (VI) or (VII) 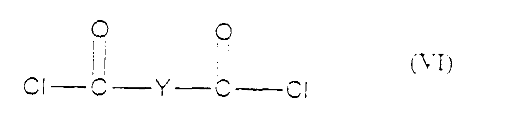 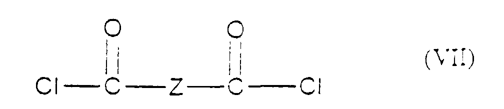 wherein G, Y, Z, E, R¹ and R² have the meaning stated in claim 1.

3. Use of the segmented N-alkylpolyurethaneamides according to claim 1 for the production and coating of plastic mouldings, films and fibres.

## Revendications

1. N-alkylpolyuréthanamides segmentés répondant à la formule (I) 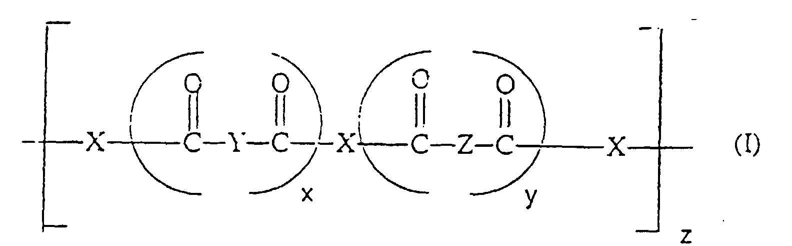 dans laquelle X représente des oligoamides de formule (II) 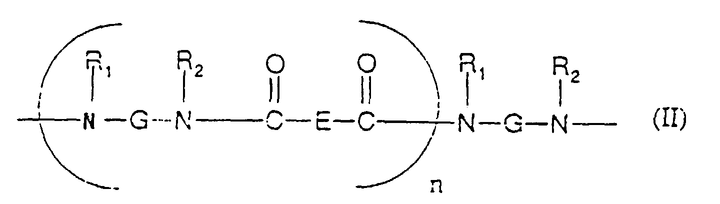 dans laquelle
E représente un radical alkylène en C₂-C₁₂ ou un radical cycloalkylène en C₆-C₈, un radical arylène en C₆-C₁₄, de préférence un radical alkylène en C₄-C₈,
G représente un radical alkylène en C₂-C₁₂,
R₁ et R₂ peuvent être identiques ou différents et représentent des radicaux alkyle en C₁-C₁₂ ou représentent de préférence des membres d'un diazahétérocycle dont le cycle se compose de 6 ou 7 atomes,
n représente un nombre naturel de 1 à 30, de préférence de 2 à 10,
Y représente des radicaux diglycols possédant une valeur Mn >400, de préférence de 600 à 20.000, et
Z représente des radicaux diglycols possédant une valeur Mn <400 ou encore des radicaux d'un diphénol répondant à la formule (III)
**-O-D-O (III)**
(D = un radical aromatique)
x et y représentent respectivement 0 ou 1, au moins un des deux représentant 1,
z représente un nombre qui indique que le poids moléculaire du polymère total prend des valeurs entre 5.000 et 250.000, de préférence de 15.000 à 150.000.

2. Procédé pour la préparation des N-alkylpolyuréthanamides segmentés selon la revendication 1, caractérisé en ce que l'on condense des polyamides à bas poids moléculaires répondant à la formule (V) 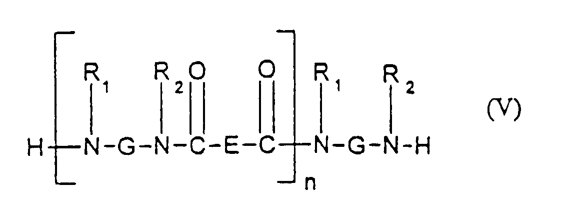 avec des esters bischlorocarboniques répondant aux formules (VI), respectivement (VII) 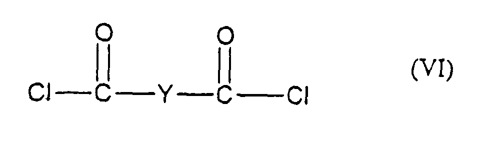 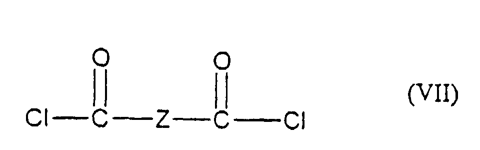 dans lesquelles G, Y, Z, E, R₁ et R₂ ont la signification indiquée à la revendication 1.

3. Utilisation des N-alkylpolyuréthanamides segmentés selon la revendication 1 pour la préparation et l'enduction de corps moulés en matières synthétiques, de feuilles et de fibres.
